# EUROPÄISCHE PATENTSCHRIFT

(11) **EP 2 107 257 B1**
(45) Veröffentlichungstag und Bekanntmachung des Hinweises auf die Patenterteilung: **12.04.2017**
(21) Anmeldenummer: 09002900.0
(22) Anmeldetag: 28.02.2009
(51) Int. Cl.: F15B 15/22

(54) **Fluidbetätigter Arbeitszylinder**
Fluid operated work cylinder
Vérin fluidique

(30) Priorität: 31.03.2008 DE 102008016518
(43) Veröffentlichungstag der Anmeldung: 07.10.2009
(73) Patentinhaber: FESTO AG & Co. KG, 73734 Esslingen (DE)
(72) Erfinder: Weberruss, Rolf, 71394 Kernen (DE); Müller, Gerald, 70329 Stuttgart (DE); Wagner, Albrecht, 73650 Winterbach (DE)
(74) Vertreter: Patentanwälte Magenbauer & Kollegen Partnerschaft mbB

(56) Entgegenhaltungen:
- EP-A1- 0 097 751
- WO-A1-88/03609
- DE-A1- 19 732 761
- DE-U1-202007 008 833
- US-A- 3 528 339

## Beschreibung

Die Erfindung betrifft einen fluidbetätigten Arbeitszylinder, mit einem Zylindergehäuse, in dem ein Antriebskolben einer durch Fluidbeaufschlagung bewegbaren Antriebseinheit angeordnet ist, der mit mindestens einer gegenüberliegenden Abschlusswand des Zylindergehäuses eine Arbeitskammer begrenzt, in die mit einer ersten Kanalmündung ein im Zylindergehäuse verlaufender Hauptkanal einmündet, der zu einer an einer Außenfläche des Zylindergehäuses angeordneten, der Zu- und Abfuhr eines Antriebsfluides dienenden Anschlussöffnung führt, wobei die Antriebseinheit Verschlussmittel aufweist, die zum Zwecke einer Endlagendämpfung der Antriebseinheit die erste Kanalmündung verschließen, wenn der Antriebskolben bei seiner Annäherung an die Abschlusswand eine Dämpfungsposition erreicht, so dass das während einer sich anschließenden Dämpfungsphase aus der Arbeitskammer verdrängte Antriebsfluid nurmehr über.einen ebenfalls im Zylindergehäuse verlaufenden Dämpfungskanal abströmen kann, der einerseits mit einer zweiten Kanalmündung ebenfalls in die Arbeitskammer einmündet und andererseits mit dem Hauptkanal verbunden ist und in dessen Verlauf nach Art eines Überdruckventils mit federbelastetem Verschlussglied ausgebildetes, einen druckabhängig veränderlichen Strömungsquerschnitt definierendes Dämpfungs-Drosselventil eingeschaltet ist.

Ein fluidbetätigter Arbeitszylinder dieser Art ist aus der DE 19 732 761 A1 bekannt. Er ist mit Mitteln zur Endlagendämpfung einer Antriebseinheit ausgestattet, die die Antriebseinheit durch Aufbau einer fluidischen Gegenkraft abbremsen, wenn ein Antriebskolben der Antriebseinheit eine gewisse Dämpfungsposition kurz vor einer Abschlusswand des Zylindergehäuses erreicht. Ab dieser Dämpfungsposition verschließt ein kolbenförmiger Verschlusskörper der Antriebseinheit eine ihm zugeordnete Kanalmündung eines Hauptkanals, so dass fortan das weiterhin verdrängte Antriebsfluid nurmehr über einen Dämpfungskanal zu einer an der Außenfläche des Zylindergehäuses angeordneten Anschlussöffnung ausströmen kann. In den Dämpfungskanal ist ein als Dämpfungs-Drosselventil bezeichenbares Drosselventil eingeschaltet, das nach Art eines Überdruckventils aufgebaut ist und über ein federbelastetes Verschlussglied verfügt, so dass es in druckabhängig angepasster Weise einen Strömungsquerschnitt für das verdrängte Antriebsfluid freigibt. So wird beispielsweise bei hoher Bewegungsenergie der Antriebseinheit aufgrund des sich zu Beginn der Dämpfungsphase aufbauenden hohen Gegendruckes das Dämpfungs-Drosselventil weiter geöffnet als bei einer geringeren Bewegungsenergie der Antriebseinheit. Auf diese Weise liegt ein sich in gewissem Rahmen hinsichtlich seiner Dämpfungsintensität selbst anpassendes Endlagendämpfungssystem vor. Auch die DE 20 2007 008 833 U1 offenbart einen solchen Arbeitszylinder.

Ähnlich arbeitet ein aus der DE 196 37 291 C2 bekannter Arbeitszylinder. Dort ist allerdings zusätzlich noch ein Entlüftungsventil vorhanden, das vom Antriebskolben bei Erreichen seiner Endlage geöffnet wird, um einen eventuell noch vorhandenen Restdruck abzubauen und einen Rückprall der Antriebseinheit zu verhindern.

Die DE 691 23 764 T2, die DE 199 52 881 C2 und das Patent-Abstract of Japan der JP 56046107 A offenbaren jeweils einen Arbeitszylinder, der mit Mitteln zur Endlagendämpfung ausgestattet ist, deren Dämpfungs-Drosselventil als einfaches Stromventil mit druckunabhängig vorgegebenem Strömungsquerschnitt ausgebildet ist. Ansonsten ist die für die Endlagendämpfung zuständige Funktionsweise die gleiche wie im Falle der DE 20 2007 008 833 U9. Allerdings ist bei dem Arbeitszylinder der DE 691 23 764 T2 zusätzlich noch ein Geschwindigkeitsregulierventil vorhanden, mit dem sich die außerhalb der Dämpfungsphase vorliegende Geschwindigkeit der Antriebseinheit einstellen lässt. Das Geschwindigkeitsregulierventil ist in den Verlauf des Hauptkanals eingeschaltet und wird unabhängig von der Position der Antriebseinheit von dem vom Antriebskolben verdrängten Fluid durchströmt. In der Dämpfungsphase liegt eine Reihenschaltung von Dämpfungs-Drosselventil und Geschwindigkeitsregulierventil vor, wobei hier allerdings das Dämpfungs-Drosselventil wegen des von ihm normalerweise vorgegebenen kleineren Strömungsquerschnittes für die Geschwindigkeit der Antriebseinheit verantwortlich ist.

Im Falle der DE 691 23 764 T2 besteht somit die Möglichkeit, die Geschwindigkeit der Antriebseinheit für die Dämpfungsphase und für die als Hubphase bezeichenbare Bewegungsphase außerhalb der Dämpfungsphase getrennt voneinander einzustellen. Jedoch ist der Arbeitsbereich des Dämpfungs-Drosselventils hier geringer als bei den weiter oben diskutierten Arbeitszylindern, da das Dämpfungs-Drosselventil druckunabhängig einen festen Strömungsquerschnitt vorgibt und folglich keine selbsttätige Anpassung an die Bewegungsenergie der abzubremsenden Antriebseinheit möglich ist.

Es ist die Aufgabe der vorliegenden Erfindung, einen mit druckabhängig arbeitenden Endlagendämpfungsmitteln ausgestatteten Arbeitszylinder zu schaffen, der auch eine variable Einstellung der in der Hubphase vorliegenden Geschwindigkeit der Antriebseinheit ermöglicht.

Zur Lösung dieser Aufgabe ist in Verbindung mit den eingangs genannten Merkmalen vorgesehen, dass in den Verlauf des Hauptkanals ein die Geschwindigkeit der Antriebseinheit außerhalb der Dämpfungsphase bestimmendes Geschwindigkeitsregulierventil mit einem einen variabel einstellbaren, jedoch druckunabhängigen Strömungsquerschnitt definierenden Geschwindigkeitsvorgabe-Drosselventil und einen hierzu parallel geschalteten Rückschlagventil eingeschaltet ist, wobei der Dämpfungskanal zwischen dem Geschwindigkeitsregulierventil und der Anschlussöffnung mit dem Hauptkanal verbunden ist.

Während der eigentlichen Hubphase außerhalb der Dämpfungsphase ist somit in den Strömungsweg des in die Arbeitskammer eingespeisten oder aus dieser verdrängten Fluides ein Geschwindigkeitsregulierventil eingeschaltet, das dem zuströmenden Fluid aufgrund des entsprechend angeordneten Rückschlagventils einen freien Zutritt ermöglicht, dem abströmenden Fluid jedoch durch das dann wirksame Geschwindigkeitsvorgabe-Drosselventil einen Strömungswiederstand entgegensetzt, dessen Höhe letztlich für die Hubgeschwindigkeit der Antriebseinheit außerhalb der Dämpfungsphase verantwortlich ist. Diese Hubgeschwindigkeit kann durch entsprechende Justierung des Geschwindigkeitsvorgabe-Drosselventils anwendungsspezifisch variiert werden. Während der Dämpfungsphase ist das Dämpfungs-Drosselventil für eine starke Verringerung der Ausströmrate des Druckmediums verantwortlich, so dass die Antriebseinheit bis zum Erreichen ihrer Endlage sanft abgebremst wird. Da der vom Dämpfungs-Drosselventil vorgegebene Strömungsquerschnitt druckabhängig angepasst wird, variiert die während der Dämpfungsphase mögliche Ausströmrate automatisch in Abhängigkeit von der Bewegungsenergie der Antriebseinheit und ermöglicht somit ohne manuelles Nachjustieren ein breiteres Anwendungsspektrum. Hierbei resultiert ein großer Vorteil aus dem Umstand, dass der Dämpfungskanal nicht in den zwischen der ersten Kanalmündung und dem Geschwindigkeitsregulierventil verlaufenden Kanalast einmündet, sondern in den sich zwischen dem Geschwindigkeitsregulierventil und der Anschlussöffnung erstreckenden Kanalast. Letzteres hat zur Folge, dass das durch das Dämpfungs-Drosselventil hindurch abströmende Fluid im Anschluss an das Dämpfungs-Drosselventil ungehindert und insbesondere ungedrosselt abströmen kann und sich stromab des Dämpfungs-Drosselventils insbesondere kein Gegendruck aufbaut, der das Bewegungsverhalten des Verschlussgliedes des Dämpfungs-Drosselventils beeinträchtigen könnte. Somit ergibt sich eine zuverlässige Funktionsweise des Dämpfungs-Drosselventils unabhängig von der am Geschwindigkeitsvorgabe-Drosselventil eingestellten Drosselungsintensität.

Vorteilhafte Weiterbildungen der Erfindung gehen aus den Unteransprüchen hervor.

Sowohl das Dämpfungs-Drosselventil als auch das Geschwindigkeitsregulierventil sind zweckmäßigerweise in diejenige Abschlusswand integriert, die diejenige Arbeitskammer begrenzt, in die die erste und zweite Kanalmündung einmünden. Ist der Arbeitszylinder in vorteilhafter Weise zweifach mit Endlagendämpfungsmaßnahmen und Geschwindigkeitsreguliermaßnahmen ausgestattet, die für je eine der beiden möglichen Bewegungsrichtungen der Antriebseinheit zuständig sind, sind die einander zugeordneten Ventile zweckmäßigerweise in jeweils eine der beiden stirnseitigen Abschlusswände des Zylindergehäuses integriert.

Die Integrationsmaßnahmen sehen insbesondere vor, dass alle Komponenten des Dämpfungs-Drosselventils und des Geschwindigkeitsregulierventils vollständig im Innern der Abschlusswand untergebracht sind, abgesehen eventuell von mindestens einem Betätigungsglied, das über die Außenfläche des Zylindergehäuses vorstehen kann und über das sich die Drosselungsintensität des Geschwindigkeitsvorgabe-Drosselventils und eventuell auch des Dämpfungs-Drosselventils verändern lässt.

Ein das Verstellen des Strömungsquerschnittes des Geschwindigkeitsregulier-Drosselventils ermöglichendes Betätigungsglied kann prinzipiell seitlich am Zylindergehäuse bzw. an der Abschlusswand angeordnet sein. Besonders vorteilhaft ist aber auch eine Platzierung an der dem Antriebskolben entgegengesetzten äußeren Stirnseite der Abschlusswand, so dass die Seitenfläche der Abschlusswand für Befestigungsmaßnahmen oder sonstige Zwecke uneingeschränkt zur Verfügung steht.

Die Abschlusswand kann einstückig mit einem sich anschließenden Zylinderrohr ausgebildet sein, ist jedoch zweckmäßigerweise als eigenständiger Zylinderdeckel konzipiert.

Bei den die erste Kanalmündung während der Dämpfungsphase verschließenden Verschlussmitteln handelt es sich zweckmäßigerweise um einen Verschlusskörper, der beginnend mit der Dämpfungsphase bis zum Erreichen der Endlage mehr und mehr in den Hauptkanal eintaucht. Hierbei kooperiert er zweckmäßigerweise mit einer ihn umschließenden, an der Abschlusswand fixierten ringförmigen Dichtung.

Der Verschlusskörper kann insbesondere kolben- oder hülsenförmig ausgebildet sein, mit einem bezüglich dem Antriebskolben geringeren Durchmesser.

Der Arbeitszylinder kann vom kolbenstangenlosen Typ sein, bei dem die Bewegung des Antriebskolbens berührungslos magnetisch oder über einen einen Längsschlitz des Zylindergehäuses durchsetzenden Mitnehmer auf ein außen am Zylindergehäuse angeordnetes Abtriebsteil übertragen wird. Für universelle Einsätze besonders geeignet ist eine Bauform, bei der die Antriebseinheit eine mit dem Antriebskolben verbundene Kolbenstange aufweist, die stirnseitig, entweder an nur einer Seite oder an beiden Seiten, aus dem Zylindergehäuse herausragt.

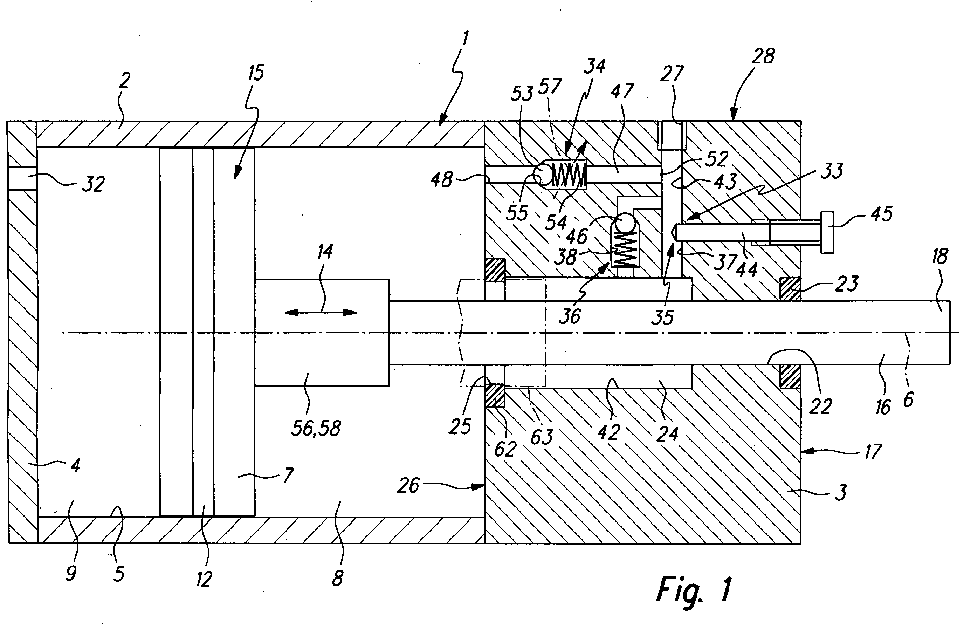

Nachfolgend wird die Erfindung anhand der beiliegenden Zeichnung näher erläutert. Deren einzige Figur (Figur 1) zeigt einen schematisierten Längsschnitt durch eine bevorzugte Ausführungsform des erfindungsgemäßen Arbeitszylinders bei einer Zwischenstellung der Antriebseinheit zwischen ihren beiden Endlagen.

Der in Figur 1 gezeigte fluidbetätigte Arbeitszylinder ist ein für den Betrieb mit Druckluft ausgebildeter Pneumatikzylinder, lässt sich aber auch mit flüssigem Antriebsfluid als Hydraulikzylinder einsetzen.

Der Arbeitszylinder enthält ein längliches Zylindergehäuse 1, mit einem Zylinderrohr 2, das an beiden Stirnseiten durch je eine erste bzw. zweite Abschlusswand 3, 4 abgeschlossen ist. Mindestens eine Abschlusswand kann einstückig mit dem Zylinderrohr 2 ausgebildet sein. Exemplarisch sind beide Abschlusswände 3, 4 bezüglich dem Zylinderrohr 2 eigenständige Komponenten in Form von Zylinderdeckeln. Die gegenseitige Befestigung erfolgt beispielsweise durch Verschrauben, durch Zusammenspannen mittels Zugankern, durch eine stoffschlüssige Verbindung oder durch eine Sicken- und/oder Bördelverbindung. Strichpunktiert bei 6 ist die Längsachse des Zylindergehäuses 1 angedeutet.

Das Zylinderrohr 2 und die beiden Abschlusswände 3, 4 begrenzen gemeinsam einen Gehäuseinnenraum 5. In ihm befindet sich ein in Achsrichtung der Längsachse 6 beweglicher Antriebskolben 7, der den Gehäuseinnenraum 5 in eine der ersten Abschlusswand 3 zugewandte erste Arbeitskammer 8 sowie eine der zweiten Abschlusswand 4 zugewandte zweite Arbeitskammer 9 fluiddicht unterteilt. Zur Abdichtung ist an der Peripherie des Antriebskolbens 7 mindestens ein Dichtungsring 12 angeordnet, der mit der Innenfläche des Zylinderrohres 2 gleitverschieblich in dichtendem Kontakt steht.

Der Antriebskolben 7 ist Bestandteil einer gemäß Doppelpfeil 14 in Achsrichtung der Längsachse 6 bezüglich dem Zylindergehäuse 1 linear bewegbaren Antriebseinheit 15, die auch noch eine mit dem Antriebskolben 7 fest verbundene Kolbenstange 16 enthält, welche sich koaxial zu dem Zylindergehäuse 1 erstreckt und die die erste Abschlusswand 3 gleitverschieblich durchsetzt. Sie ragt an der dem Gehäuseinnenraum 5 entgegengesetzten äußeren Stirnseite 17 der ersten Abschlusswand 3 mit einem Abgriffsabschnitt 18 heraus, an dem nicht näher abgebildete Befestigungsmittel angeordnet sind, die das Befestigen einer zu bewegenden Komponente ermöglichen.

Die Kolbenstange 16 durchsetzt eine die erste Abschlusswand 3 durchdringende Durchgangsöffnung 22, in der ein die Kolbenstange 16 dichtend umschließender Dichtungsring 23 angeordnet ist, so dass ein Austritt von Fluid aus der ersten Arbeitskammer 8 zur Atmosphäre verhindert ist.

Die erste Abschlusswand 13 ist von einem ersten Hauptkanal 24 durchsetzt, der mit einer ersten Kanalmündung 25 flächenmittig an der der ersten Arbeitskammer 8 zugewandten inneren Stirnfläche 26 der ersten Abschlusswand 3 zu der ersten Arbeitskammer 8 ausmündet. Das entgegengesetzte Ende des ersten Hauptkanals 24 mündet mit einer Anschlussöffnung 27 zu einer bezüglich der Längsachse 6 radial orientierten seitlichen Außenfläche 28 der ersten Abschlusswand 3 aus. Alternativ könnte die Anschlussöffnung 27 auch an der äußeren Stirnfläche 17 der ersten Abschlusswand 3 liegen.

Ein zweiter Hauptkanal 32 durchsetzt die zweite Abschlusswand 4 und mündet in die zweite Arbeitskammer 9 ein. An ihn kann außen, wie an die Anschlussöffnung 27 des ersten Hauptkanals 24, eine Fluidleitung angeschlossen werden, die zu einer Steuerventileinrichtung führt, mit der die Fluidbeaufschlagung der jeweils angeschlossenen Arbeitskammer 8, 9 gesteuert werden kann.

Die Antriebseinheit 15 ist zwischen einer eingefahrenen und einen ausgefahrenen Endlage bewegbar. In der eingefahrenen Endlage liegt der Antriebskolben 7 an der Innenfläche der zweiten Abschlusswand 4 an, in der ausgefahrenen Endlage an der inneren Stirnfläche 26 der ersten Abschlusswand 3.

Die Zeichnung zeigt die Antriebseinheit 15 während einer Hubphase beim Ausfahren. Hierbei wird unter Überdruck stehendes Antriebsfluid über den zweiten Hauptkanal 32 in die zweite Arbeitskammer 9 eingespeist, wobei der sich in Richtung zur ersten Abschlusswand 3 bewegende Antriebskolben 7 das in der ersten Arbeitskammer 8 enthaltene Antriebsfluid verdrängt und durch den ersten Hauptkanal 24 hindurch zur Anschlussöffnung 27 und von dort aus weiter zur Atmosphäre oder in einen Tank ausschiebt. Zum Hervorrufen einer dieser Ausfahrbewegung entgegengesetzten Einfahrbewegung wird in den ersten Hauptkanal 24 Druckmedium eingespeist und gleichzeitig die zweite Arbeitskammer 9 über den zweiten Hauptkanal 32 entlüftet.

Der ersten Abschlusswand 3 sind zur Beeinflussung der Bewegung der Antriebseinheit 15 dienende Geschwindigkeitsreguliermittel und diesbezüglich eigenständige Endlagendämpfungsmittel zugeordnet. Sie beeinflussen die Ausfahrbewegung. Die zweite Abschlusswand 4 enthält keine solchen Mittel, so dass die Einfahrbewegung der Antriebseinheit 15 ohne Geschwindigkeitsregulierung und ohne Endlagendämpfung stattfindet. Allerdings können auch der zweiten Abschlusswand 4 entsprechende Mittel zugeordnet sein, um die Einfahrbewegung in gleicher Weise beeinflussen zu können wie die Ausfahrbewegung.

Die Geschwindigkeitsreguliermittel enthalten ein in den Verlauf es ersten Hauptkanals 24 eingeschaltetes Geschwindigkeitsregulierventil 33 mit einem als Geschwindigkeitsvorgabe-Drosselventil 35 bezeichneten Drosselventil und einem diesem parallel geschalteten Rückschlagventil 36. Der erste Hauptkanal 24 spaltet sich in einem Zwischenbereich in einen das Geschwindigkeitsvorgabe-Drosselventil 35 enthaltenden ersten Kanalzweig 37 sowie einen hierzu parallel geschalteten, das Rückschlagventil 36 enthaltenden zweiten Kanalzweig 38 auf, die diesseits und jenseits zusammengeführt sind, wobei sie diesseits in einen inneren Endabschnitt 42 und jenseits in einen äußeren Endabschnitt 43 des ersten Hauptkanals 24 übergehen. Der innere Endabschnitt 42 endet mit der ersten Kanalmündung 25 und erstreckt sich ausgehend von dieser ein Stück weit axial in die erste Abschlusswand 3 hinein, von der, insbesondere seitlich, die beiden Kanalzweige 37, 38 abgehen. Der äußere Endabschnitt 43 führt unmittelbar zu der Anschlussöffnung 27.

Das Geschwindigkeitsvorgabe-Drosselventil 35 ist als konventionelles Stromventil mit druckunabhängigem Funktionsverhalten ausgestaltet. Es definiert einen gewissen Strömungsquerschnitt, der mechanisch starr vorgegeben ist und unabhängig von den im ersten Hauptkanal 24 herrschenden Druckverhältnissen konstant bleibt. Allerdings kann dieser Strömungsquerschnitt durch externen Eingriff variiert werden, zu welchem Zweck beim Ausführungsbeispiel ein in den ersten Hauptkanal 24 hineinragendes Drosselglied 44 mit einem außen über das Zylindergehäuse 1 vorstehenden Betätigungsglied 45 bewegungsgekoppelt ist, dessen Handhabung ein mehr oder weniger tiefes Eintauchen des Drosselgliedes 44 in den ersten Hauptkanal 24 bewirkt. Das Betätigungsglied 45 ist insbesondere zur Schraubbetätigung ausgebildet und kann außen manuell erfasst und verdreht werden. Allerdings können auch Mittel vorgesehen sein, die eine Fernbetätigung ermöglichen.

In vorteilhafter Weise ragt das Betätigungsglied 45 an der axial orientierten äußeren Stirnseite 17 aus der ersten Abschlusswand 3 heraus.

Es ist auch eine Bauform möglich, bei der das Betätigungsglied 45, wie zweckmäßigerweise auch die übrigen Komponenten des Geschwindigkeitsvorgabe-Drosselventils 35, komplett im Innern der ersten Abschlusswand 3 untergebracht sind und nicht nach außen vorstehen.

Das Rückschlagventil 36 ist so ausgebildet, dass es eine Fluidströmung durch den zweiten Kanalzweig 38 hindurch in Richtung zur ersten Arbeitskammer 8 zulässt, in der Gegenrichtung jedoch verhindert. Es enthält exemplarisch ein federbelastet in eine Schließstellung vorgespanntes Absperrglied 46, das vom zuströmenden Fluid entgegen der Schließkraft auf es einwirkender Federmittel von seinem Ventilsitz abgehoben werden kann.

Die Einstellung des Geschwindigkeitsvorgabe-Drosselventils 35 bestimmt den dem aus der ersten Arbeitskammer 8 verdrängten Antriebsfluid zur Verfügung stehenden Strömungsquerschnitt und folglich die Hubgeschwindigkeit der ausfahrenden Antriebseinheit 15. Je kleiner der eingestellte Strömungsquerschnitt ist, desto langsamer fährt die Antriebseinheit 15 aus.

Das zum Hervorrufen der Einfahrbewegung an der Anschlussöffnung 27 eingespeiste Antriebsfluid erfährt hingegen keine Drosselung. Es kann über das sich hierbei öffnende Rückschlagventil 36 hinweg unter Umgehung des Geschwindigkeitsvorgabe-Drosselventils 35 in den inneren Endabschnitt 42 und von dort in die erste Arbeitskammer 8 zuströmen.

Allerdings beeinflusst das Geschwindigkeitsregulierventil 33 die Ausfahrbewegung der Antriebseinheit 15 nur während einer als Hubphase bezeichneten Bewegungsphase, die in eine Dämpfungsphase übergeht, wenn sich der Antriebskolben 7 bis zu einer bestimmten Dämpfungsposition an die erste Abschlusswand 3 angenähert hat. In dieser Dämpfungsphase wird, bis zum Erreichen der ausgefahrenen Endlage, das Bewegungsverhalten durch die schon erwähnten Endlagendämpfungsmittel bestimmt, die als Hauptkomponente ein Dämpfungs-Drosselventil 34 enthalten, das in einen als Dämpfungskanal 47 bezeichneten Kanal eingeschaltet ist.

Der Dämpfungskanal 47 mündet mit einer zweiten Kanalmündung 48 abseits der ersten Kanalmündung 25 ebenfalls in die erste Arbeitskammer 8 ein. Vorzugsweise sitzt die zweite Kanalmündung 48 wie die erste Kanalmündung 25 an der inneren Stirnfläche 26 der ersten Abschlusswand 3.

Mit seinem entgegengesetzten äußeren Ende mündet der in der Wandung der ersten Abschlusswand 3 verlaufende Dämpfungskanal 47 an einer Verbindungsstelle 52 innerhalb der ersten Abschlusswand 3 in den ersten Hauptkanal 24 ein. Besagte Verbindungsstelle 52 liegt dabei zwischen dem Geschwindigkeitsregulierventil 33 und der Anschlussöffnung 27. Mit anderen Worten steht der Dämpfungskanal 47 direkt mit dem äußeren Endabschnitt 43 des ersten Hauptkanals 24 in Verbindung.

Das Dämpfungs-Drosselventil 34 ist von einem Typ mit sich druckabhängig selbstständig anpassendem Strömungsquerschnitt. Es ist nach Art eines Überdruckventils ausgebildet und enthält ein vorzugsweise kugelförmig ausgebildetes Verschlussglied 53, das durch eine Federeinrichtung 54 gegen einen Ventilsitz 55 in eine Schließstellung gedrückt wird. Wie bei einem Rückschlagventil kann das Verschlussglied 53 - vorausgesetzt es liegt ein ausreichend hoher Fluiddruck vor - nur von einem entgegen der Federkraft anströmenden Fluid vom Ventilsitz 55 abgehoben werden, um einen Strömungsquerschnitt für das Hindurchströmen durch den Dämpfungskanal 47 freizugeben. Wird das Verschlussglied 53 in entgegengesetzter Richtung angeströmt, wird es verstärkt in den Ventilsitz 55 gedrückt und bleibt in der Schließstellung.

Das Dämpfungs-Drosselventil 34 ist so in den Dämpfungskanal 47 eingeschaltet, dass es von einer zur Anschlussöffnung 27 gerichteten Fluidströmung geöffnet werden kann, während es einem über die Anschlussöffnung 27 eingespeisten Fluid den Weg durch den Dämpfungskanal 47 versperrt.

An der Antriebseinheit 15 sind die Bewegung 14 mitmachende Verschlussmittel 56 in einer Weise angeordnet, dass sie die erste Kanalmündung 25 beginnend mit der Dämpfungsposition der Antriebseinheit 15 und vorzugsweise während der gesamten sich anschließenden Dämpfungsphase bis zum Erreichen der ausgefahrenen Endlage verschließen. Dieses Verschließen kann ein vollständiges oder auch nur teilweises Verschließen sein, und es können auch Maßnahmen getroffen sein, die kurz vor Erreichen der ausgefahrenen Endlage die Kanalmündung wieder um ein größeres Maß freigeben. Wie dem auch sei, hat jedenfalls das durch die Verschlussmittel 56 bewirkte vollständige oder teilweise Verschleißen der ersten Kanalmündung 25 zur Folge, dass das bis dahin durch den ersten Hauptkanal 24 abströmende Antriebsfluid an einem Durchtritt durch diesen ersten Hauptkanal 24 gehindert oder zumindest stark eingeschränkt ist, so dass sich in der ersten Arbeitskammer 8 ein Gegendruck aufbaut. Dieser Gegendruck aktiviert das Dämpfungs-Drosselventil 34, dessen Verschlussglied 53 vom Ventilsitz 55 abhebt und dem in der ersten Arbeitskammer 8 eingeschlossenen Fluidvolumen durch den Dämpfungskanal 47 hindurch ein Ausströmen zur Anschlussöffnung 27 gestattet, allerdings mit einer Strömungsrate, die wesentlich geringer ist als diejenige, die während der Hubphase durch das Geschwindigkeitsregulierventil 33 vorgegeben war. Als Folge wird die Antriebseinheit 15 während der Dämpfungsphase intensiv abgebremst und trifft nurmehr relativ sanft auf die erste Abschlusswand 3 auf.

Die Federeinrichtung 54 bestimmt die Öffnungscharakteristik des Dämpfungs-Drosselventils 34. Durch Wahl einer entsprechenden Feder kann somit das Dämpfungsverhalten beeinflusst werden. Strichpunktiert durch einen Pfeil bei 57 ist angedeutet, dass Einstellmittel vorhanden sein können, mit denen sich die Vorspannung der Federeinrichtung 54 verändern lässt, um ohne Austausch der Federeinrichtung 54 die Öffnungscharakteristik des Verschlussgliedes 53 zu beeinflussen.

Bedingt durch die Federeinrichtung 54 öffnet das Dämpfungs-Drosselventil 34 in Abhängigkeit von der Höhe des sich in der ersten Arbeitskammer 8 aufbauenden Gegendruckes mehr oder weniger weit. Der Strömungsquerschnitt ist also druckabhängig veränderlich. Dadurch wird beispielsweise erreicht, dass bei einer mit hoher Bewegungsenergie in die Dämpfungsposition gelangenden Antriebseinheit zumindest anfänglich, auf Grund der hohen Druckkraft, ein größerer Strömungsquerschnitt freigegeben wird, der einen Rückprall der Antriebseinheit 15 verhindert. Somit ergibt sich eine optimierte Endlagendämpfung in einem relativ breiten Energiebereich, anders als im Falle einer druckunabhängigen Drosseleinrichtung des Typs, wie er exemplarisch bei dem Geschwindigkeitsvorgabe-Drosselventil 35 realisiert ist.

Indem die Verbindungsstelle 52 bezogen auf die Abströmrichtung des verdrängten Antriebsfluides stromab des Geschwindigkeitsregulierventils 33 angeordnet ist, kann sich zwischen dem Dämpfungs-Drosselventil 34 und der Anschlussöffnung 27 kein Staudruck aufbauen, der die druckabhängige Aktivierung des Dämpfungs-Drosselventils 34 beeinträchtigen könnte. Ein solcher Staudruck könnte durch das Geschwindigkeitsvorgabe-Drosselventil 35 generiert werden, wenn das Geschwindigkeitsregulierventil 33 zwischen der Verbindungsstelle 52 und der Anschlussöffnung 27 platziert wäre.

Durch die geschilderte Ausgestaltung erreicht man eine optimale Funktion des Dämpfungs-Drosselventils 34 in Kombination mit einem Geschwindigkeitsregulierventil 33 und nur einer einzigen Anschlussöffnung 27, an die sowohl der erste Hauptkanal 24 als auch der Dämpfungskanal 47 angeschlossen ist. Hierbei liegt eine Parallelschaltung des Dämpfungs-Drosselventils 34 und des Geschwindigkeitsregulierventils 33 vor.

Die Verschlussmittel 56 bestehen insbesondere aus einem zum Antriebskolben 7 koaxialen Verschlusskörper 58, der auf der der ersten Abschlusswand 3 zugewandten Seite des Antriebskolbens 7 angeordnet ist und entweder als Hülse auf der dort angeordneten Kolbenstange 16 sitzt oder als Kolbenkörper zwischen den Antriebskolben 7 und die Kolbenstange 16 eingegliedert ist. Der innere Endabschnitt 42 des ersten Hauptkanals 24 ist hierbei von einem Längenabschnitt der Durchgangsöffnung 22 gebildet, dessen Durchmesser größer ist als der Außendurchmesser der Kolbenstange 16, so dass sich zwischen letzterer und der Innenfläche des inneren Endabschnittes 42 ein Ringraum ergibt, der als ringförmige erste Kanalmündung 25 zu der ersten Arbeitskammer 8 ausmündet.

Im Bereich der ersten Kanalmündung 25 ist koaxial zu dieser ein Dichtungsring 62 an der ersten Abschlusswand 3 angeordnet, der dichtend am Außenumfang des Verschlusskörpers 58 zur Anlage gelangt, wenn dieser mit Beginn der Dämpfungsphase in den inneren Endabschnitt 42 einfährt. Strichpunktiert bei 63 ist ein Zwischenzustand der Dämpfungsphase gezeigt, bei dem der Verschlusskörper 58 ein Stück weit in den inneren Endabschnitt 42 eingetaucht ist.

Ist eine Endlagendämpfung bei einfahrender Antriebseinheit 15 gewünscht, kommt als Verschlussmittel 56 insbesondere ein kolbenförmig an den Antriebskolben 7 anschließender Verschlusskörper 58 zum Einsatz.

Gemäß der Abbildung in Figur 1 können sämtliche Kanäle und Komponenten der Endlagendämpfungsmittel und Geschwindigkeitsreguliermittel vollständig in die erste Abschlusswand 3 integriert sein, so dass sich ein externer Anbau erübrigt. Lediglich das Betätigungsglied 45 und ein eventuell vorhandenes Betätigungsglied für die Veränderung der Federvorspannung der Federeinrichtung 54 können bei Bedarf ein Stück weit aus dem Zylindergehäuse 1 herausragen.

## Patentansprüche

1. Fluidbetätigter Arbeitszylinder, mit einem Zylindergehäuse (1), in dem ein Antriebskolben (7) einer durch Fluidbeaufschlagung bewegbaren Antriebseinheit (15) angeordnet ist, der mit mindestens einer gegenüberliegenden Abschlusswand (3) des Zylindergehäuses (1) eine Arbeitskammer (8) begrenzt, in die mit einer ersten Kanalmündung (25) ein im Zylindergehäuse (1) verlaufender Hauptkanal (24) einmündet, der zu einer an einer Außenfläche (28) des Zylindergehäuses (1) angeordneten, der Zu- und Abfuhr eines Antriebsfluides dienenden Anschlussöffnung (27) führt, wobei die Antriebseinheit (15) Verschlussmittel (56) aufweist, die zum Zwecke einer Endlagendämpfung der Antriebseinheit (15) die erste Kanalmündung (25) verschließen, wenn der Antriebskolben (7) bei seiner Annäherung an die Abschlusswand (3) eine Dämpfungsposition erreicht, so dass das während einer sich anschließenden Dämpfungsphase aus der Arbeitskammer (8) verdrängte Antriebsfluid nurmehr über einen ebenfalls im Zylindergehäuse (1) verlaufenden Dämpfungskanal (47) abströmen kann, der einerseits mit einer zweiten Kanalmündung (48) ebenfalls in die Arbeitskammer (8) einmündet und andererseits mit dem Hauptkanal (24) verbunden ist und in dessen Verlauf ein nach Art eines Überdruckventils mit federbelastetem Verschlussglied (53) ausgebildetes, einen druckabhängig veränderlichen Strömungsquerschnitt definierendes Dämpfungs-Drosselventil (34) eingeschaltet ist, **dadurch gekennzeichnet, dass** in den Verlauf des Hauptkanals (24) ein die Geschwindigkeit der Antriebseinheit (7) außerhalb der Dämpfungsphase bestimmendes Geschwindigkeitsregulierventil (33) mit einem einen variabel einstellbaren, jedoch druckunabhängigen Strömungsquerschnitt definierenden Geschwindigkeitsvorgabe-Drosselventil (35) und einem hierzu parallel geschalteten Rückschlagventil (36) eingeschaltet ist, wobei der Dämpfungskanal (47) zwischen dem Geschwindigkeitsregulierventil (33) und der Anschlussöffnung (27) mit dem Hauptkanal (24) verbunden ist.

2. Arbeitszylinder nach Anspruch 1, **dadurch gekennzeichnet, dass** das Dämpfungs-Drosselventil (34) und das Geschwindigkeitsregulierventil (33) in die Abschlusswand (3) integriert sind.

3. Arbeitszylinder nach Anspruch 2, **dadurch gekennzeichnet, dass** die dem Dämpfungs-Drosselventil (34) und dem Geschwindigkeitsregulierventil (33) gemeinsam zugeordnete Anschlussöffnung (27) ebenfalls an der Abschlusswand (3) angeordnet ist.

4. Arbeitszylinder nach einem der Ansprüche 1 bis 3, **dadurch gekennzeichnet, dass** ein das Verstellen des Strömungsquerschnittes des Geschwindigkeitsregulier-Drosselventils (35) ermöglichendes Betätigungsglied (45) an der dem Antriebskolben (7) entgegengesetzten äußeren Stirnseite (17) der Abschlusswand (3) angeordnet ist.

5. Arbeitszylinder nach einem der Ansprüche 1 bis 4, **dadurch gekennzeichnet, dass** die Abschlusswand (3) als bezüglich einem sich anschließenden, den Antriebskolben (7) aufnehmenden Zylinderrohr (2) eigenständiger Zylinderdeckel ausgebildet ist.

6. Arbeitszylinder nach einem der Ansprüche 1 bis 5, **dadurch gekennzeichnet, dass** die erste Kanalmündung (25) des Hauptkanals (24) an der dem Antriebskolben (7) zugewandten inneren Stirnseite (26) der Abschlusswand (3) angeordnet ist und die Verschlussmittel (56) von einem insbesondere kolbenförmigen oder hülsenförmigen Verschlusskörper (58) gebildet sind, der zum Verschließen der ersten Kanalmündung (25) in den Hauptkanal (24) eintauchen kann.

7. Arbeitszylinder nach einem der Ansprüche 1 bis 6, **dadurch gekennzeichnet, dass** die Antriebseinheit (15) eine Kolbenstange (16) aufweist, die stirnseitig aus dem Zylindergehäuse (1) herausragt.

8. Arbeitszylinder nach einem der Ansprüche 1 bis 7, **dadurch gekennzeichnet, dass** das Verschlussglied (53) des Dämpfungs-Drosselventils (34) kugelförmig ausgebildet ist.

9. Arbeitszylinder nach einem der Ansprüche 1 bis 8, **dadurch gekennzeichnet, dass** der Antriebskolben (7) axial zwischen zwei Abschlusswänden (3, 4) des Zylindergehäuses (1) angeordnet ist, wobei jeweils eigenständige Mittel zur Endlagendämpfung und zur Geschwindigkeitsregulierung für beide Bewegungsrichtungen der Antriebseinheit (15) vorhanden sind.

## Claims

1. Fluid-actuated working cylinder, with a cylinder housing (1) in which is mounted a driving piston (7) of a drive unit (15) movable by means of fluidic pressurisation, which with at least one opposite end wall (3) of the cylinder housing (1) bounds a working chamber (8), into which a main passage (24) running in the cylinder housing (1) opens out with a first passage orifice (25) and leads to a connection port (27) provided on an outer surface (28) of the cylinder housing (1) and serving for the inflow and outflow of a driving fluid, wherein the drive unit (15) has closing means (56) which close the first passage orifice (25) for purposes of end position damping of the drive unit (15) when the driving piston (7) on its approach to the end wall (3) reaches a damping position, so that the driving fluid forced out of the working chamber (8) during a subsequent damping phase is now able to flow out via a damping passage (47) similarly running in the cylinder housing (1) and which at one end likewise enters the working chamber (8) at a second passage orifice (48) and at the other end is connected to the main passage (24), and in its course is interposed a damping restrictor valve (34) designed in the manner of a pressure relief valve with spring-loaded closing element (53), defining a flow cross-section which is variable dependent on pressure, **characterised in that**, interposed in the course of the main passage (24) is a speed control valve (33), determining the speed of the drive unit (7) outside the damping phase, with a speed presetting restrictor valve (35) defining a variably adjustable but pressure-independent flow cross-section, and a non-return valve (36) connected in parallel thereto, wherein the damping passage (47) is connected to the main passage (24) between the speed control valve (33) and the connection port (27).

2. Working cylinder according to claim 1, **characterised in that** the damping restrictor valve (34) and the speed control valve (33) are integrated in the end wall (3).

3. Working cylinder according to claim 2, **characterised in that** the connection port (27) commonly assigned to the damping restrictor valve (34) and the speed control valve (33) is likewise provided on the end wall (3).

4. Working cylinder according to any of claims 1 to 3, **characterised in that** an actuating member (45) facilitating the adjustment of the flow cross-section of the speed presetting restrictor valve (35) is located on the outer end face (17) of the end wall (3) opposite the driving piston (7).

5. Working cylinder according to any of claims 1 to 4, **characterised in that** the end wall (3) is in the form of a cylinder cover independent of an adjacent cylinder liner (2) accommodating the driving piston (7).

6. Working cylinder according to any of claims 1 to 5, **characterised in that** the first passage orifice (25) of the main passage (24) is located on the inner end face (26) of the end wall (3) facing the driving piston (7), and the closing means (56) are formed by a closing body (58), in particular piston-shaped or sleeve-shaped which, to close the first passage orifice (25), is able to dip into the main passage (24).

7. Working cylinder according to any of claims 1 to 6, **characterised in that** the drive unit (15) has a piston rod (16) which extends out from the end face of the cylinder housing (1).

8. Working cylinder according to any of claims 1 to 7, **characterised in that** the closing element (53) of the damping restrictor valve (34) is spherical in shape.

9. Working cylinder according to any of claims 1 to 8, **characterised in that** the driving piston (7) is mounted axially between two end walls (3, 4) of the cylinder housing (1), wherein in each case independent means for end position damping and for speed control are provided for both directions of movement of the drive unit (15).

## Revendications

1. Vérin de travail à actionnement fluidique, avec un carter de vérin (1), dans lequel est disposé un piston d'entraînement (7) d'une unité d'entraînement (15) pouvant être déplacée sous l'action du fluide, lequel piston d'entraînement délimite, avec au moins une paroi de terminaison (3) faisant face du carter de vérin (1), une chambre de travail (8), dans laquelle un canal principal (24) s'étendant dans le carter de vérin (1) débouche par une première embouchure de canal (25), lequel canal principal mène à une ouverture de raccordement (27) disposée au niveau d'une surface extérieure (28) du carter de vérin (1), servant à l'arrivée et à l'évacuation d'un fluide d'entraînement, dans lequel l'unité d'entraînement (15) présente des moyens de fermeture (56), qui ferment la première embouchure de canal (25) aux fins d'un amortissement de fin de course de l'unité d'entraînement (15) quand le piston d'entraînement (7) atteint, lorsqu'il se rapproche de la paroi de terminaison (3), une position d'amortissement de sorte que le flux de fluide d'entraînement refoulé hors de la chambre de travail (8) au cours d'une phase d'amortissement subséquente peut être évacué dès lors par l'intermédiaire d'un canal d'amortissement (47) s'étendant également dans le carter de vérin (1), lequel canal d'amortissement débouche d'une part par une deuxième embouchure de canal (48) également dans la chambre de travail (8) et est relié d'autre part au canal principal (24) et sur l'extension duquel est placée une soupape d'étranglement d'amortissement (34) réalisée à la manière d'une soupape de surpression avec un organe de fermeture (53) soumis à la charge d'un ressort, définissant une section transversale d'écoulement variant en fonction de la pression, **caractérisé en ce qu'**est placée, dans l'extension du canal principal (24), une soupape de régulation de vitesse (33) déterminant la vitesse de l'unité d'entraînement (7) en dehors de la phase d'amortissement, avec une soupape d'étranglement de spécification de la vitesse (35) définissant une section transversale d'écoulement à réglage variable, toutefois indépendante de la pression et une soupape anti-retour (36) montée de manière parallèle par rapport à cette dernière, dans lequel le canal d'amortissement (47) est relié au canal principal (24) entre la soupape de régulation de vitesse (33) et l'ouverture de raccordement (27).

2. Vérin de travail selon la revendication 1, **caractérisé en ce que** la soupape d'étranglement d'amortissement (34) et la soupape de régulation de vitesse (33) sont intégrées dans la paroi de terminaison (3).

3. Vérin de travail selon la revendication 2, **caractérisé en ce que** l'ouverture de raccordement (27) associée et commune à la soupape d'étranglement d'amortissement (34) et à la soupape de régulation de vitesse (33) est disposée également au niveau de la paroi de terminaison (3).

4. Vérin de travail selon l'une quelconque des revendications 1 à 3, **caractérisé en ce qu'**un organe d'actionnement (45) permettant l'ajustement de la section transversale d'écoulement de la soupape d'étranglement et de régulation de vitesse (35) est disposé au niveau du côté frontal (17) extérieur, opposé au piston d'entraînement (7), de la paroi de terminaison (3).

5. Vérin de travail selon l'une quelconque des revendications 1 à 4, **caractérisé en ce que** la paroi de terminaison (3) est réalisée sous la forme d'un couvercle de cylindre autonome par rapport à un tube de vérin (2) situé dans le prolongement, recevant le piston d'entraînement (7).

6. Vérin de travail selon l'une quelconque des revendications 1 à 5, **caractérisé en ce que** la première embouchure de canal (25) du canal principal (24) est disposée au niveau du côté frontal (26) intérieur, tourné vers le piston d'entraînement (7), de la paroi de terminaison (3), et les moyens de fermeture (56) sont formés par un corps de fermeture (58) présentant en particulier une forme de piston ou une forme de douille, lequel peut s'enfoncer dans le canal principal (24) aux fins de la fermeture de la première embouchure de canal (25).

7. Vérin de travail selon l'une quelconque des revendications 1 à 6, **caractérisé en ce que** l'unité d'entraînement (15) présente une tige de piston (16), qui dépasse côté frontal du carter de vérin (1).

8. Vérin de travail selon l'une quelconque des revendications 1 à 7, **caractérisé en ce que** l'organe de fermeture (53) de la soupape d'étranglement d'amortissement (34) est réalisé de manière à présenter une forme de bille.

9. Vérin de travail selon l'une quelconque des revendications 1 à 8, **caractérisé en ce que** le piston d'entraînement (7) est disposé de manière axiale entre deux parois de terminaison (3, 4) du carter de vérin (1), dans lequel respectivement des moyens autonomes servant à l'amortissement de fin de course et servant à la régulation de vitesse sont prévus pour les deux directions de déplacement de l'unité d'entraînement (15).
